# EUROPEAN PATENT APPLICATION

(11) **EP 4 372 847 A1**
(43) Date of publication of application: **22.05.2024**
(21) Application number: 23196290.3
(22) Date of filing: 08.09.2023
(51) Int. Cl.: H01M 4/505, H01M 4/525, H01M 10/0525, H01M 10/0567, H01M 10/0569, H01M 10/42

(54) **RECHARGEABLE LITHIUM BATTERY**

(30) Priority: 16.11.2022 KR 20220153723
(71) Applicant: Samsung SDI Co., Ltd., Yongin-si, Gyeonggi-do 17084 (KR); Research & Business Foundation Sungkyunkwan University, Gyeonggi-do 16419 (KR)
(72) Inventor: SEONG, Wonmo, 17084 Yongin-si (KR); KONG, Youngsun, 17084 Yongin-si (KR); KANG, Seok Mun, 17084 Yongin-si (KR); YOON, Jaesang, 17084 Yongin-si (KR); HASE, Naoyuki, 17084 Yongin-si (KR); JUN, Do-Wook, 17084 Suwon-si (KR); KIM, Jongsoon, 16419 Suwon-si (KR); LEE, Yongseok, 16419 Suwon-si (KR)
(74) Representative: Marks & Clerk LLP

(57) **Abstract**

Provided is a rechargeable lithium battery including an electrolyte solution including a non-aqueous organic solvent, a lithium salt, and an additive; a positive electrode including a positive electrode active material; and a negative electrode including a negative electrode active material, wherein the additive includes one or more of a compound represented by Chemical Formula 1A and a compound represented by Chemical Formula 1B, the positive electrode active material includes a lithium nickel manganese-based oxide represented by Chemical Formula 2, and a charging upper limit voltage of the rechargeable lithium battery is about 4.4 V to about 4.7 V.
Chemical Formula 1A and Chemical Formula 1B are as defined in the specification.

## Description

### BACKGROUND OF THE INVENTION

### (a) Field of the Invention

The present disclosure relates to a rechargeable lithium battery.

### (b) Description of the Related Art

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

In particular, as IT devices increasingly achieve high performance, a high-capacity battery is required, but the high capacity may be realized through expansion of a voltage range, increasing energy density but bringing about a problem of deteriorating performance of a positive electrode due to oxidization of an electrolyte solution in the high voltage range.

In particular, cobalt-free lithium nickel manganese-based oxide is a positive electrode active material including not cobalt but nickel, manganese, and the like as a main component in its composition, and accordingly, a positive electrode including the same may be economical and realize high energy density and thus draws attentions as a next generation positive electrode active material.

However, when the positive electrode including the cobalt-free lithium nickel manganese-based oxide is used in a high voltage environment, transition metals may be eluted due to structural collapse of the positive electrode, thereby causing a problem such as gas generation inside a cell, capacity reduction, and the like. This transition metal elution tends to be aggravated in a high temperature environment, wherein the eluted transition metals are precipitated on the surface of a negative electrode and may cause a side reaction and thereby increase battery resistance and deteriorate battery cycle-life and output characteristics.

Accordingly, when the positive electrode including the cobalt-free lithium nickel manganese-based oxide is used, an electrolyte solution applicable under high-voltage and high-temperature conditions is required.

### SUMMARY OF THE INVENTION

An embodiment provides a rechargeable lithium battery exhibiting improved high-voltage characteristics and high-temperature characteristics by combining a positive electrode including cobalt-free lithium nickel manganese-based oxide with an electrolyte solution capable of effectively protecting the positive electrode including cobalt-free lithium nickel manganese-based oxide to reduce elution of transition metals under high-voltage and high-temperature conditions and thus to suppress structural collapse of the positive electrode.

An embodiment provides a rechargeable lithium battery including an electrolyte solution including a non-aqueous organic solvent, a lithium salt, and an additive; a positive electrode including a positive electrode active material; and a negative electrode including a negative electrode active material,
wherein the additive includes one or more of a compound represented by Chemical Formula 1A and a compound represented by Chemical Formula 1B,
the positive electrode active material includes a lithium nickel manganese-based oxide represented by Chemical Formula 2, and
a charging upper limit voltage of the rechargeable lithium battery is 4.4 V to 4.7 V.

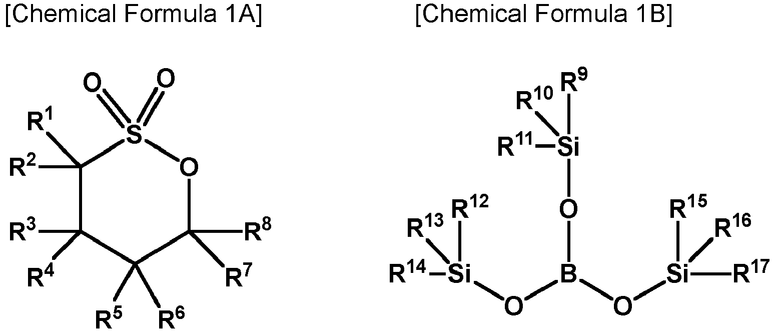

In Chemical Formula 1A and Chemical Formula 1B,
R¹ to R⁸ are each independently hydrogen, a halogen, a substituted or unsubstituted C1 to C10 alkyl group or a substituted or unsubstituted C6 to C20 aryl group, and
R⁹ to R¹⁷ are each independently a substituted or unsubstituted C1 to C10 alkyl group or a substituted or unsubstituted C6 to C20 aryl group;

   [Chemical Formula 2] LiₐNiₓMn_{1-x-y}A_{y}O_{2±b}X_{c}

   wherein, in Chemical Formula 2,
   0.9≤a≤1.2, 0≤b≤0.1, 0≤c≤0.1, 0.7≤x≤0.95, and 0≤y < 0.3,
   A is one or more element selected from Li, B, Na, Mg, Al, Ti, and Si, and
   X is one or more element selected from S, F, P, and Cl.
   R¹ to R⁸ in Chemical Formula 1A may each independently be hydrogen, or a substituted or unsubstituted C1 to C10 alkyl group.
   R⁹ to R¹⁷ in Chemical Formula 1B may each independently be a substituted or unsubstituted C1 to C10 alkyl group.

The compound represented by Chemical Formula 1A and the compound represented by Chemical Formula 1B may be selected from compounds listed in Group 1.

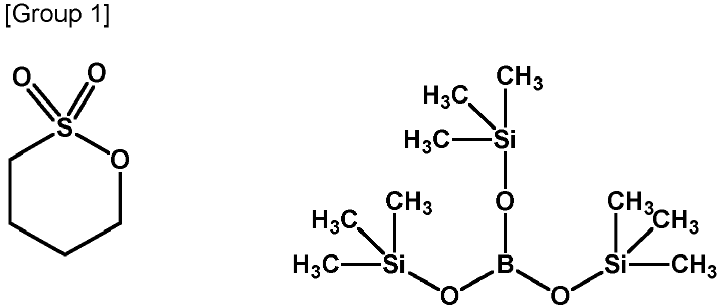

The additive may be included in an amount of about 0.01 parts by weight to about 3.0 parts by weight based on 100 parts by weight of the electrolyte solution for a rechargeable lithium battery.

The non-aqueous organic solvent may include cyclic carbonate and chain carbonate in a volume ratio of about 1:9 to about 9:1.

The electrolyte solution may further include one or more of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propene sultone (PST), propane sultone (PS), lithium tetrafluoroborate (LiBF₄), lithium difluorophosphate (LiPO₂F₂), and 2-fluoro biphenyl (2-FBP).

The positive electrode active material may include LiNi_{0.75}Mn_{0.25}O₂, LiNi_{0.80}Mn_{0.20}O₂, LiNi_{0.85}Mn_{0.15}O₂, LiNi_{0.90}Mn_{0.10}O₂, LiNi_{0.95}Mn_{0.05}O₂, or a solid solution thereof.

The positive electrode may further include a positive electrode protective layer (cathode-electrolyte interface (CEI)) formed after initial charging at a voltage of 4.4 V or higher, and a thickness of the positive electrode protective layer may be about 1 nm to about 7 nm.

At least some of the above and other features of the invention are set out in the claims.

An embodiment may realize a rechargeable lithium battery exhibiting improved battery stability and cycle-life characteristics by combining a positive electrode including cobalt-free lithium nickel manganese-based oxide with an electrolyte solution capable of effectively protecting the positive electrode to secure phase transition safety of the positive electrode in a high-temperature and high-voltage environment and to suppress decomposition of the electrolyte solution and a side reaction with electrodes and thus reduce gas generation and simultaneously, suppress an increase in battery internal resistance.

### BRIEF DESCRIPTION OF THE DRAWINGS

FIG. 1 is a schematic view illustrating a rechargeable lithium battery according to an embodiment.
FIG. 2 shows transmission electron microscope (TEM) images of cross sections of the positive electrode active materials according to Example 1 and Comparative Example 1 when the charging upper limit charging voltage is set to 4.5 V.
FIG. 3 is a graph showing a ratio of 50 cycles' discharge capacity to initial discharge capacity of each rechargeable lithium battery cell of Example 1 (4.3 V, 4.5 V), Comparative Example 1 (4.5 V), Example 2 (4.5 V), and Comparative Example 2 (4.5 V).
FIG. 4 is a graph showing discharge capacity and coulombic efficiency (C.E.) according to a cycle of the rechargeable lithium battery cell of Example 3 according to the high-temperature charge and discharge cycles.
FIG. 5 shows charge and discharge profiles of the rechargeable lithium battery cell of Example 3 at a charging upper limit voltage of 4.5 V according to the high-temperature charge and discharge cycles.
FIG. 6 shows charge and discharge profiles of the rechargeable lithium battery cell of Example 3 at a charging upper limit voltage of 4.3 V according to the high-temperature charge and discharge cycles.
FIG. 7 is a graph showing charge and discharge capacity and coulombic efficiency for 50 cycles of the rechargeable lithium battery cell of Example 1 which was charged at 4.5 V in a first cycle and then, 3.0 V to 4.3 V in the subsequent cycles.
FIG. 8 is a graph showing charge and discharge capacity for 100 cycles of the rechargeable lithium battery cell of Example 1, while charged at a charging upper limit voltage of 4.3 to 4.6 V.

### DETAILED DESCRIPTION OF THE EMBODIMENTS

Hereinafter, a rechargeable lithium battery according to an embodiment of the present invention will be described in detail with reference to the accompanying drawings. However, the present invention is not limited to these embodiments and the present invention is defined by the scope of the claims.

In the present specification, unless otherwise defined, "substituted" refers to replacement of at least one hydrogen in a substituent or compound is deuterium, a halogen group, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C20 alkyl group, a C6 to C30 aryl group, a C1 to C10 fluoroalkyl group, or a cyano group

In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A rechargeable lithium battery may be classified as lithium ion batteries, lithium ion polymer batteries, and lithium polymer batteries according to the presence of a separator and the type of electrolyte solution used therein. Rechargeable lithium batteries may have a variety of shapes and sizes, and include cylindrical, prismatic, coin, or pouch-type batteries, and may be thin film batteries or may be rather bulky in size. Structures and manufacturing methods for the rechargeable lithium battery pertaining to this disclosure are well known in the art.

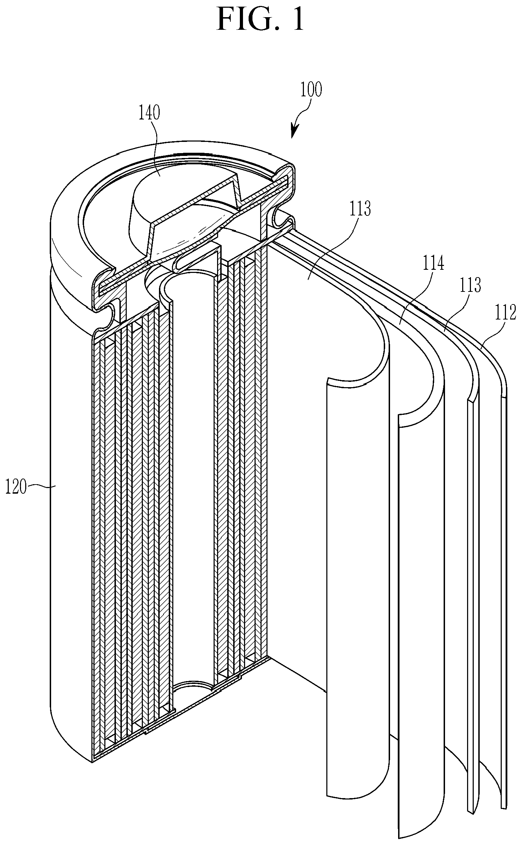

Herein, a cylindrical rechargeable lithium battery will be described as an example of the rechargeable lithium battery. FIG. 1 schematically shows the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte solution (not shown) impregnating the positive electrode 114, the negative electrode 112, and the separator 113, a battery case 120 housing the battery cell, and a sealing member 140 sealing the battery case 120.

Hereinafter, a more detailed configuration of the rechargeable lithium battery 100 according to an embodiment will be described.

A rechargeable lithium battery according to an embodiment includes an electrolyte solution, a positive electrode, and a negative electrode.

The electrolyte solution includes a non-aqueous organic solvent, a lithium salt, and an additive, and the additive includes one or more of a compound represented by Chemical Formula 1A and a compound represented by Chemical Formula 1B.

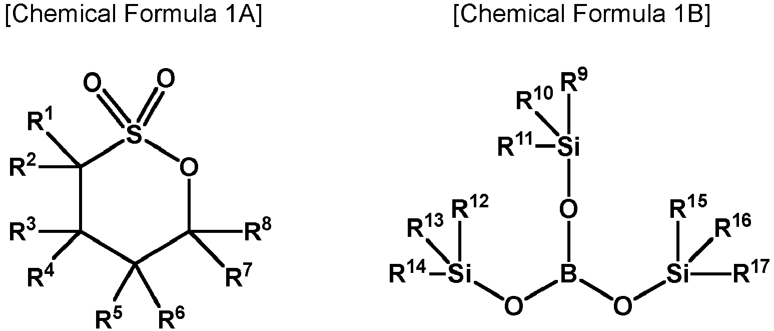

In Chemical Formula 1A and Chemical Formula 1B,
R¹ to R⁸ are each independently hydrogen, a halogen, a substituted or unsubstituted C1 to C10 alkyl group, or a substituted or unsubstituted C6 to C20 aryl group, and
R⁹ to R¹⁷ are each independently a substituted or unsubstituted C1 to C10 alkyl group or a substituted or unsubstituted C6 to C20 aryl group.

The positive electrode active material includes a lithium nickel manganese-based oxide represented by Chemical Formula 2.

[Chemical Formula 2] LiₐNiₓMn_{1-x-y}A_{y}O_{2±b}X_{c}

In Chemical Formula 2,
0.9≤a≤1.2, 0≤b≤0.1, 0≤c≤0.1, 0.7≤x≤0.95 and 0≤y < 0.3,
A is one or more element selected from Li, B, Na, Mg, Al, Ti, and Si, and
X is one or more elements selected from S, F, P, and Cl.

In addition, the charging upper limit voltage of the rechargeable lithium battery is 4.4 V to 4.7 V.

A positive electrode active material including cobalt-free lithium nickel manganese-based oxide requires charging at a voltage of greater than or equal to 4.3 V to store an equivalent amount of energy due to higher resistance than the positive electrode active material including cobalt-containing lithium nickel manganese-based oxide, which may cause decomposition of an electrolyte solution and elution of transition metals, particularly Ni and Mn, on the surface thereof.

This transition metal elution phenomenon may generate deterioration of performance of a positive electrode and short-circuits caused by elution of transition metals, resulting in deteriorating cycle-life characteristics of a battery and sharply increasing resistance.

The aforementioned phenomenon may be alleviated by a positive electrode protective layer formed by a reduction reaction during the initial charge, but when the voltage is increased, additives are continuously consumed even after the initial charge, which eventually makes it difficult to resolve structural instability.

However, when the aforementioned electrolyte solution is used together, even though charged at about 4.4 V or higher, a strong and uniform positive electrode protective layer may be formed, thereby mitigating the deterioration of battery cycle-life characteristics and the rapid increase in resistance.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, the ketone-based solvent may include cyclohexanone, and the like. The alcohol-based solvent may include ethanol, isopropyl alcohol, and the like, and the aprotic solvent may include nitriles such as R-CN (wherein R is a hydrocarbon group having a C2 to C20 linear, branched, or cyclic structure and may include a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used alone or in a mixture, and when used in a mixture, the mixing ratio may be appropriately adjusted in accordance with a desired battery performance, which is widely understood by those skilled in the art.

The carbonate-based solvent may be prepared by mixing a cyclic carbonate and a chain carbonate. When the cyclic carbonate and chain carbonate are mixed together in a volume ratio of about 1:9 to about 9:1, a performance of the electrolyte solution may be improved.

In particular, in an embodiment, the non-aqueous organic solvent may include the cyclic carbonate and the chain carbonate in a volume ratio of about 2:8 to about 5:5, and as a specific example, the cyclic carbonate and the chain carbonate may be included in a volume ratio of about 2:8 to about 4:6.

As a more specific example, the cyclic carbonate and the chain carbonate may be included in a volume ratio of about 2:8 to about 3:7.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound represented by Chemical Formula 3.

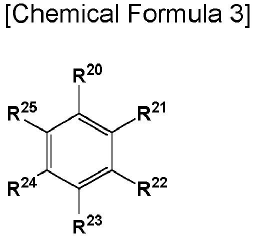

In Chemical Formula 3, R²⁰ to R²⁵ are the same or different and are hydrogen, a halogen, a C1 to C10 alkyl group, a C1 to C10 haloalkyl group, or a combination thereof.

Specific examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt may include one or more selected from LiPF₆, LiBF₄, lithium difluoro(oxalato)borate (LiDFOB), LiPO₂F₂, LiSbF₆, LiAsF₆, Li(FSO₂)₂N (lithium bis(fluorosulfonyl)imide: LiFSI), LiC₄F₉SO₃, LiClO₄, LiAlO₂, LiAlCl₄, LiN(CₓF₂ₓ₊₁SO₂)(C_{y}F_{2y+1}SO₂) wherein, x and y are each independently an integer selected from 1 to 20, LiCl, Lil, and LiB(C₂O₄)₂ (lithium bis(oxalato) borate: LiBOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

For example, R¹ to R⁸ in Chemical Formula 1A may each independently be hydrogen or a substituted or unsubstituted C1 to C10 alkyl group.

As a specific example, R¹ to R⁸ in Chemical Formula 1A may each independently be hydrogen or a substituted or unsubstituted C1 to C6 alkyl group.

For example, R¹ to R⁸ in Chemical Formula 1A may each independently be hydrogen or a substituted or unsubstituted C1 to C3 alkyl group.

For example, R⁹ to R¹⁷ in Chemical Formula 1B may each independently be a substituted or unsubstituted C1 to C10 alkyl group.

As a specific example, R⁹ to R¹⁷ in Chemical Formula 1B may each independently be a substituted or unsubstituted C1 to C6 alkyl group.

For example, R⁹ to R¹⁷ in Chemical Formula 1B may each independently be a substituted or unsubstituted C1 to C3 alkyl group.

The compound represented by Chemical Formula 1A and the compound represented by Chemical Formula 1B may be selected from compounds listed in Group 1.

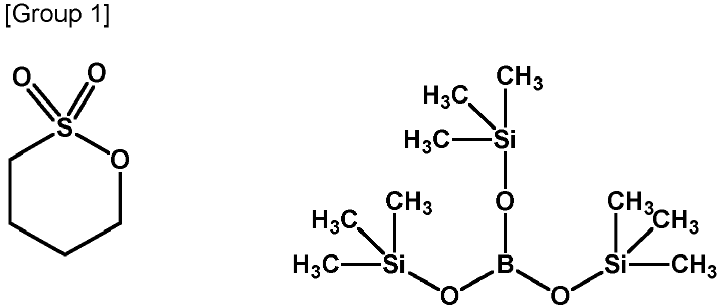

The additive may be included in an amount of about 0.01 parts by weight to about 3.0 parts by weight based on 100 parts by weight of the electrolyte solution for a rechargeable lithium battery.

For example, the additive may be included in an amount of about 0.01 parts by weight to about 2.0 parts by weight based on 100 parts by weight of the electrolyte solution for a rechargeable lithium battery.

For example, the additive may be included in an amount of about 0.05 parts by weight to about 2.0 parts by weight, about 0.1 parts by weight to about 2.0 parts by weight, or about 0.5 parts by weight to about 2.0 parts by weight based on 100 parts by weight of the electrolyte solution for a rechargeable lithium battery.

When the content range of the additive is as described above, it is possible to implement a rechargeable lithium battery having improved cycle-life characteristics and output characteristics by preventing an increase in resistance at high temperatures.

On the other hand, the electrolyte solution may further include one or more of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propene sultone (PST), propane sultone (PS), lithium tetrafluoroborate (LiBF₄), lithium difluorophosphate (LiPO₂F₂), and 2-fluoro biphenyl (2-FBP).

By further including the aforementioned other additives, cycle-life may be further improved or gases generated from the positive electrode and the negative electrode may be effectively controlled during high-temperature storage.

The other additives may be included in an amount of about 0.2 parts by weight to about 20 parts by weight, specifically about 0.2 parts by weight to about 15 parts by weight, for example, about 0.2 parts by weight to about 10 parts by weight, based on 100 parts by weight of the electrolyte solution for a rechargeable lithium battery.

When the content of other additives is as described above, the increase in film resistance may be minimized, thereby contributing to the improvement of battery performance.

The positive electrode includes a positive electrode current collector and a positive electrode active material layer formed on the positive electrode current collector, and the positive electrode active material layer includes a positive electrode active material.

The positive electrode active material includes a cobalt-free lithium nickel manganese-based oxide represented by Chemical Formula 2.

[Chemical Formula 2] LiₐNiₓMn_{1-x-y}A_{y}O_{2±b}X_{c}

In Chemical Formula 2,
0.9≤a≤1.2, 0≤b≤0.1, 0≤c≤0.1, 0.7≤x≤0.95 and 0≤y < 0.3,
A is one or more element selected from Li, B, Na, Mg, Al, Ti, and Si, and
X is one or more elements selected from S, F, P and Cl.

The cobalt-free lithium nickel manganese-based oxide may have a coating layer on the surface, or the cobalt-free lithium nickel manganese-based oxide may be mixed with another compound having a coating layer. The coating layer may include one or more coating element compound selected from an oxide of a coating element, a hydroxide of a coating element, an oxyhydroxide of a coating element, an oxycarbonate of a coating element, and a hydroxycarbonate of a coating element. The compound for the coating layer may be amorphous or crystalline. The coating element included in the coating layer may include Mg, Al, K, Na, Ca, Si, Ti, V, Sn, Ge, Ga, B, As, Zr, or a mixture thereof. The coating process may include any conventional processes as long as it does not cause any side effects on the properties of the positive electrode active material (e.g., inkjet coating, dipping), which is well known to persons having ordinary skill in this art, so a detailed description thereof is omitted.

For example, the positive electrode active material may include LiNi_{0.75}Mn_{0.25}O₂, LiNi_{0.80}Mn_{0.20}O₂, LiNi_{0.85}Mn_{0.15}O₂, LiNi_{0.90}Mn_{0.10}O₂, LiNi_{0.95}Mn_{0.05}O₂, or a solid solution thereof.

The content of the positive electrode active material may be about 90 wt% to about 98 wt% based on the total weight of the positive electrode active material layer.

In an embodiment, the positive electrode active material layer may include a binder. The content of the binder may be about 1 wt% to about 5 wt% based on the total weight of the positive electrode active material layer.

The binder improves binding properties of positive electrode active material particles with one another and with a positive electrode current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The positive electrode may further include a positive electrode protective layer (cathode-electrolyte interface (CEI)) formed after initial charging at a voltage of 4.4 V or higher, and
a thickness of the positive electrode protective layer may be about 1 nm to about 7 nm.

The positive electrode current collector may include Al foil, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions includes carbon materials. The carbon material may be any generally-used carbon-based negative electrode active material in a rechargeable lithium battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, Si-C composite, SiOₓ (0 < x < 2), a Si-Q alloy (wherein Q is an element selected from an alkali metal, an alkaline-earth metal, a Group 13 element, a Group 14 element except Si, a Group 15 element, a Group 16 element, a transition metal, a rare earth element, and a combination thereof), Sn, SnO₂, a Sn-R^{A} alloy (wherein R^{A} is an element selected from an alkali metal, an alkaline-earth metal, a Group 13 element, a Group 14 element except Sn, a Group 15 element, a Group 16 element, a transition metal, a rare earth element, and a combination thereof), and the like. One or more of these materials may be mixed with SiO₂.

The elements Q and R^{A} may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and the like.

In a more specific embodiment, the negative electrode active material may include graphite, a Si composite or mixture thereof.

The Si composite may include a core including Si-based particles and an amorphous carbon coating layer. For example, the Si-based particles may include one or more selected from silicon particles, a Si-C composite, SiOₓ (0 < x ≤ 2), and a Si alloy.

For example, pores may be included in the central portion of the core including the Si-based particles, a radius of the central portion may correspond to about 30% to about 50% of the radius of the Si composite, an average particle diameter of the Si composite may be about 5 µm to about 20 µm, and an average particle diameter of the Si-based particles may be about 10 nm to about 200 nm.

In the present specification, an average particle diameter (D50) may be a particle size at a volume ratio of 50% in a cumulative size-distribution curve.

When the average particle diameter of the Si-based particles is within the above ranges, volume expansion occurring during charging and discharging may be suppressed, and interruption of a conductive path due to particle crushing during charging and discharging may be prevented.

The core including the Si-based particles may further include amorphous carbon, and at this time, the central portion may not include amorphous carbon, and the amorphous carbon may exist only in the surface portion of the Si composite.

Herein, the surface portion means a region from the outermost surface of the central portion to the outermost surface of the Si composite.

In addition, the Si-based particles may be substantially uniformly included throughout the Si composite, that is, may be present in a substantially uniform concentration in the central portion and surface portion.

The amorphous carbon may be soft carbon, hard carbon, a mesophase pitch carbonized product, calcined coke, or a combination thereof.

For example, the Si-C composite may include silicon particles and crystalline carbon.

The silicon particles may be included in an amount of about 1 wt% to about 60 wt%, for example, about 3 wt% to about 60 wt%, based on the total weight of the Si-C composite.

The crystalline carbon may be, for example, graphite, and specifically, natural graphite, artificial graphite, or a combination thereof.

An average particle diameter of the crystalline carbon may be about 5 µm to about 30 µm.

When the negative electrode active material includes the graphite and Si composite together, the graphite and Si composite may be included in the form of a mixture, and the graphite and Si composite may be included in a weight ratio of about 99 : 1 to about 50 : 50.

More specifically, the graphite and Si composite may be included in a weight ratio of about 97 : 3 to about 80 : 20, or about 95 : 5 to about 80 : 20.

The amorphous carbon precursor may include coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be included in an amount of about 95 wt% to about 99 wt% based on the total weight of the negative electrode active material layer.

In an embodiment, the negative electrode active material layer may further include a binder, and optionally a conductive material. A content of the binder in the negative electrode active material layer may be about 1 wt% to about 5 wt% based on the total weight of the negative electrode active material layer. In the negative electrode active material layer, the amount of the conductive material may be about 1 wt% to about 5 wt% based on the total weight of the negative electrode active material layer.

The binder improves binding properties of negative electrode active material particles with one another and with a negative electrode current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylene copolymer, polyethylene oxide, polyvinylpyrrolidone, polyepichlorohydrin, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder in the negative electrode active material layer, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of about 0.1 parts by weight to about 3 parts by weight based on 100 parts by weight of the negative electrode active material.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material including a metal powder or a metal fiber of copper, nickel, aluminium, silver, or the like; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. Such a separator may, for example, include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

Hereinafter, examples of the present invention and comparative examples are described. These examples, however, are not in any sense to be interpreted as limiting the scope of the invention.

### Manufacture of Rechargeable Lithium Battery Cells

### Example 1

LiNi_{0.75}Mn_{0.25}O₂ as a positive electrode active material, polyvinylidene fluoride as a binder, and acetylene black as a conductive material were mixed in a weight ratio of 96:2:2 and then, dispersed in N-methyl pyrrolidone, preparing positive electrode active material slurry.

The positive electrode active material slurry was coated on a 15 µm-thick Al foil and then, dried at 100 °C and pressed, manufacturing a positive electrode.

Lithium metal was used as a negative electrode active material, and
the positive electrode and the negative electrode were assembled with a 10 µm-thick polyethylene separator to manufacture an electrode assembly, and an electrolyte solution was injected thereinto, manufacturing a coin half-cell.

The electrolyte solution had a composition as follows.

### (Composition of Electrolyte Solution)

Lithium salt: 1.2 M LiPF₆
Non-aqueous organic solvent: ethylene carbonate : ethylmethyl carbonate : dimethyl carbonate (EC:EMC:DMC = 20:20:60 in a volume ratio)
Additive: 1 part by weight of compound represented by Chemical Formula 1-1, and 1.5 parts by weight of vinylene carbonate (VC)

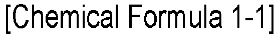

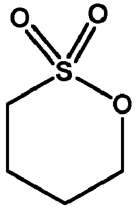

(However, in the above composition of the electrolyte solution, "parts by weight" means the relative weight of the additive based on 100 parts by weight of the electrolyte solution (lithium salt + non-aqueous organic solvent) except the additive.)

### Example 2

A rechargeable lithium battery cell was manufactured in the same manner as in Example 1 except that the compound represented by Chemical Formula 1-2 was used instead of the compound represented by Chemical Formula 1-1.

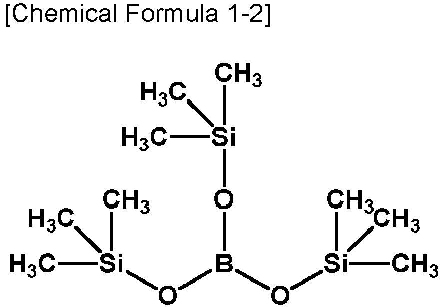

### Comparative Example 1

A rechargeable lithium battery cell was manufactured in the same manner as in Example 1 except that the compound represented by Chemical Formula 1-1 was not added.

### Comparative Example 2

A rechargeable lithium battery cell was manufactured in the same manner as in Example 1 except that 1 part by weight of tetraethyl orthosilicate (TEOS) was used instead of the compound represented by Chemical Formula 1-1.

### Example 3

A rechargeable lithium battery cell was manufactured in the same manner as in Example 1 except that the positive electrode active material composition was changed into LiNi_{0.95}Mn_{0.05}O₂.

### Evaluation 1: Surface Analysis of Positive Electrode Active Material

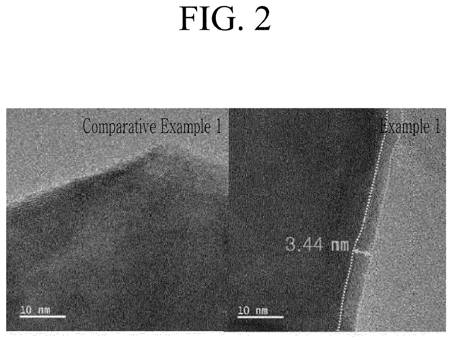

The rechargeable lithium battery cell according to Example 1 of the present invention was charged to a charging upper limit voltage of 4.5 V, and a cross-section image thereof was taken by TEM to analyze the surface of the positive electrode active material, which was shown in FIG. 2.

FIG. 2 shows TEM photographs of cross sections of the positive electrode active materials according to Example 1 and Comparative Example 1 when the charging upper limit charging voltage was set to 4.5 V.

Referring to FIG. 2, when the rechargeable lithium battery cell of Comparative Example 1 not using the compound represented by Chemical Formula 1-1 was driven at 4.5 V rather than 4.3 V, since CEI was not formed on the surface of a positive electrode, cycle-life characteristics were expected to be sharply deteriorated, but when the rechargeable lithium battery cell of Example 1 using the compound represented by Chemical Formula 1-1 was charged at 4.5 V, a uniform film with a thickness of about 2 nm to 6 nm was formed on the surface of a positive electrode to protect an active material and contributed to improving cycle-life characteristics.

### Evaluation 2: Evaluation of High-temperature Cycle-life Characteristics

The rechargeable lithium battery cells of Examples 1 to 3 and Comparative Examples 1 and 2 were once charged and discharged at 0.2 C and then, measured with respect to charge and discharge capacity.

In addition, the rechargeable lithium battery cells of Examples 1 to 3 and Comparative Examples 1 and 2 were charged to a charging upper limit voltage of 4.3 V or 4.5 V and discharged to 3.0 V at 0.2 C under a constant current condition and then, measured with respect to initial discharge capacity.

Subsequently, while charged at 1.0 C (CC/CV, 4.5 V, 0.05 C cut-off) / discharged at 1.0 C (CC, 3.0 V cut-off) at 45 °C, the rechargeable lithium battery cells were measured with respect to discharge capacity and coulombic efficiency.

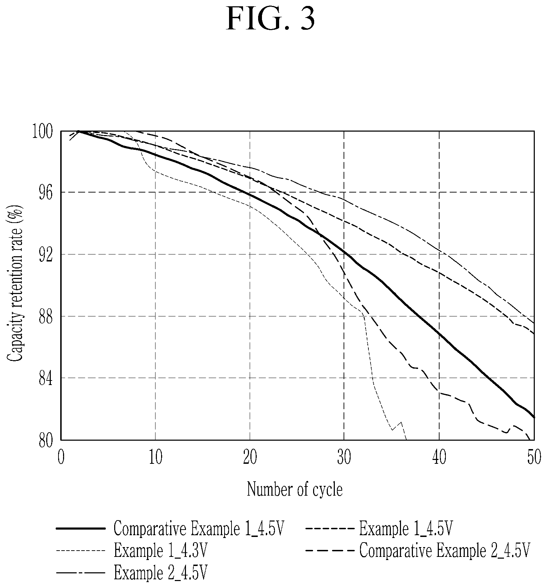

The rechargeable lithium battery cell of Example 1 (4.3 V, 4.5 V), Comparative Example 1 (4.5 V), Example 2 (4.5 V), and Comparative Example 2 (4.5 V) were calculated with respect to a ratio of 50 cycles' discharge capacity to initial discharge capacity, which was shown as capacity retention (%) in Table 1 and FIG. 3.

In addition, the rechargeable lithium battery cell of Comparative Example 1 (4.3 V) is also calculated with respect to a ratio of 50 cycles' discharge capacity to initial discharge capacity, which was shown as capacity retention (%) in Table 1.

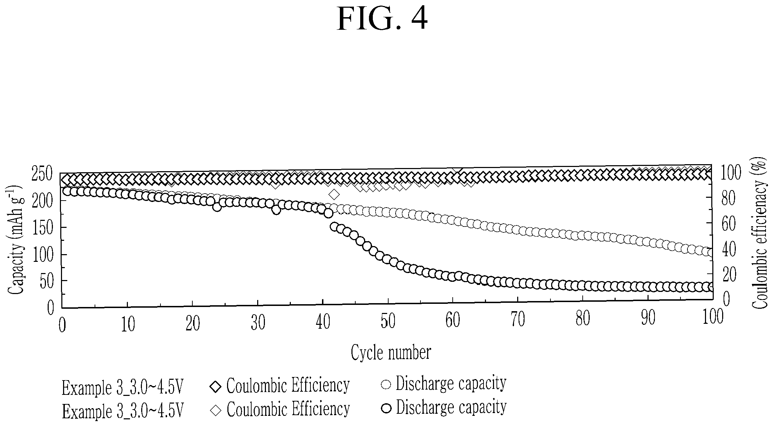

Discharge capacity, coulombic efficiency, and charge and discharge profiles according to a cycle of the rechargeable lithium battery cell of Example 3 are shown in FIGS. 4 to 6.

FIG. 3 is a graph showing a capacity ratio of 50 cycles' discharge to initial discharge capacity of each rechargeable lithium battery cell of Example 1 (4.3 V, 4.5 V), Comparative Example 1 (4.5 V), Example 2 (4.5 V), and Comparative Example 2 (4.5 V).

FIG. 4 is a graph showing discharge capacity and coulombic efficiency (C.E) according to a cycle of the rechargeable lithium battery cell of Example 3 according to the high-temperature charge and discharge cycles.

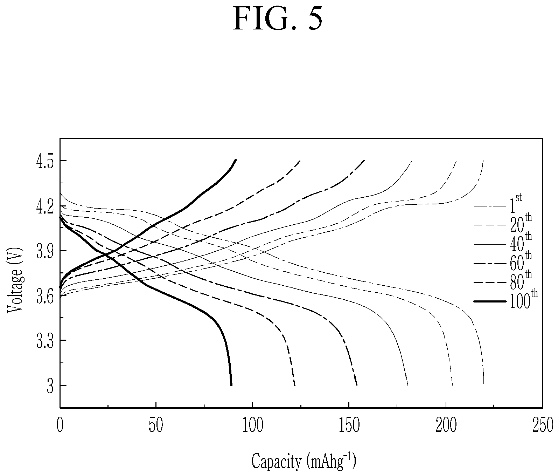

FIG. 5 shows a charge and discharge profile of the rechargeable lithium battery cell of Example 3 at the charging upper limit voltage of 4.5 V according to the high-temperature charge and discharge cycles.

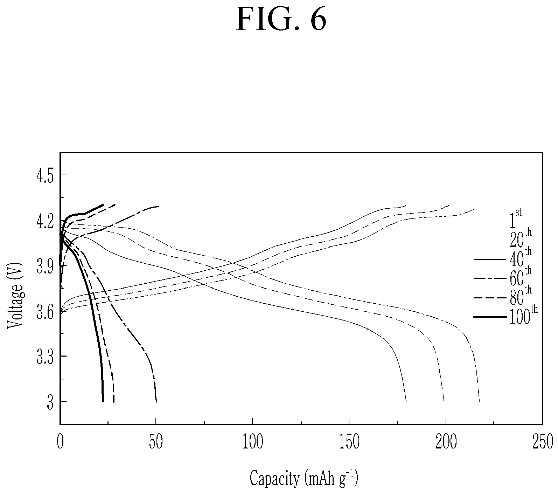

FIG. 6 shows a charge and discharge profile of the rechargeable lithium battery cell of Example 3 at the charging upper limit voltage of 4.3 V according to the high-temperature charge and discharge cycles.

**(Table 1)**

| | Charging upper limit voltage (V) | Initial discharge capacity (mAh/g, 1 C) | Capacity retention (%) (45 °C, 50 cycle) |
|---|---|---|---|
| Comparative Example 1 | 4.3 | 180.0 | 97.2 |
| | 4.5 | 200.5 | 81.5 |
| Example 1 | 4.3 | 175.8 | 60.0 |
| | 4.5 | 194.1 | 87.1 |
| Example 2 | 4.5 | 202.9 | 87.6 |
| Comparative Example 2 | 4.5 | 194.8 | 79.4 |

Referring to Table 1 and FIGS. 3 and 4, when there was no additive according to the present invention, cycle-life characteristics were sharply deteriorated at the charging upper limit voltage of 4.5 V.

On the other hand, when the additive of the present invention was added, and the charging upper limit voltage was increased to 4.5 V, the cycle-life characteristics were improved, compared with 4.3 V, which turned out to come from the formation of stable CEI on the surface of the positive electrode.

Example 2 exhibited equally improved cycle-life characteristics to Example 1 even at the charging upper limit voltage of 4.5 V.

Referring to FIGS. 5 and 6, when the charging upper limit voltage was set to be 4.3 V, capacity retention was 11% (initial cycle discharge capacity: 220.0 mAh/g, 100 cycles' discharge capacity: 25.0 mAh/g), but when increased to 4.5 V, the capacity retention was increased to 39% (initial cycle discharge capacity: 220.0 mAh/g, 100 cycles' discharge capacity: 86.0 mAh/g), which shows that charge and discharge characteristics would be expected to be improved.

### Evaluation 3: Evaluation of Charge/discharge Characteristics after 4.5 V Formation

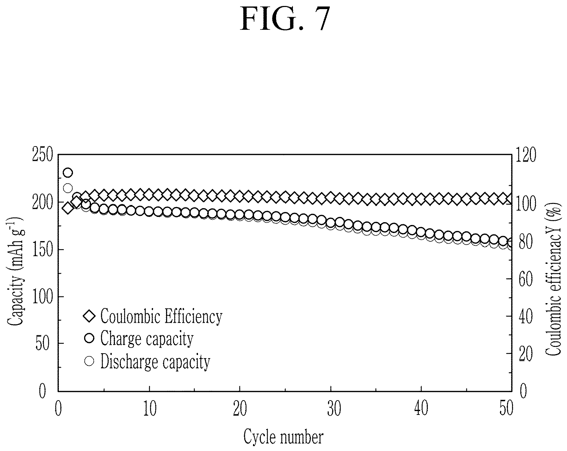

The rechargeable lithium battery cell of Example 1 was charged at 4.5 V in the first cycle, maintained at the same voltage for 12 hours and then, at 3.0 to 4.3 V in the following cycles and then, evaluated with respect to charge and discharge capacity and coulombic efficiency, and the results are shown in FIG. 7.

FIG. 7 is a graph showing charge and discharge capacity and coulombic efficiency for 50 cycles of the rechargeable lithium battery cell of Example 1 which was charged at 4.5 V in a first cycle and then, at 3.0 to 4.3 V in the subsequent cycles.
Referring to FIG. 7, when the rechargeable lithium battery cell of Example 1 was charged at 4.5 V in the first cycle, maintained there for 12 hours, and charged at 4.3 V in the following cycles, capacity retention at the 50 cycles was 77.6% (initial cycle discharge capacity: 198.3 mAh/g, 50 cycles' discharge capacity: 154.0 mAh/g), achieving much more excellent cycle-life characteristics, compared with when constantly charged at 4.3 V from the first cycle. Accordingly, CEI was formed during the high voltage charge at 4.5 V or higher and played a role of protecting a positive electrode at a low voltage of less than 4.5 V and thus improved cycle-life characteristics.

### Evaluation 4: Comparison Evaluation of Charge/discharge Characteristics according to Charging Upper Limit Voltage (4.3V to 4.6V)

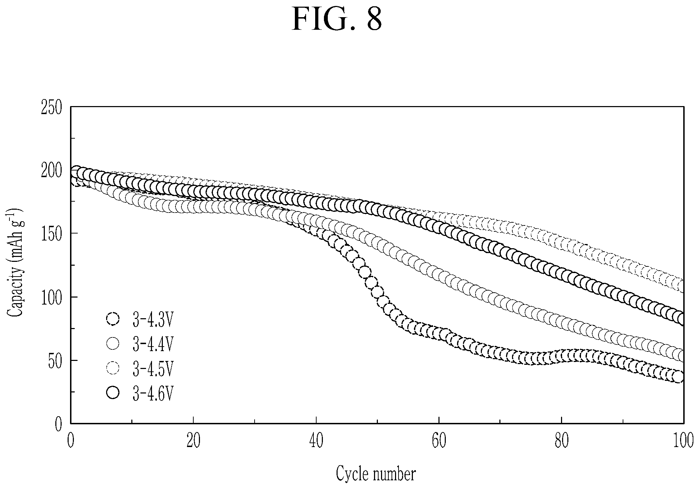

The rechargeable lithium battery cell of Example 1 was charged and discharged under each following condition;
1.0 C charge (CC/CV, 4.3 V, 0.05 C cut-off) / 1.0 C discharge (CC, 3.0 V cut-off), 45 °C;
1.0 C charge (CC/CV, 4.4 V, 0.05 C cut-off) / 1.0 C discharge (CC, 3.0 V cut-off), 45 °C;
1.0 C charge (CC/CV, 4.5 V, 0.05 C cut-off) / 1.0 C discharge (CC, 3.0 V cut-off), 45 °C; and
1.0 C charge (CC/CV, 4.6 V, 0.05 C cut-off)/1.0 C discharge (CC, 3.0 V cut-off), 45 °C to obtain each charge and discharge profile for 100 cycles, which are shown in FIG. 8.

FIG. 8 is a graph showing charge and discharge capacity for 100 cycles of the rechargeable lithium battery cell of Example 1, while charged at a charging upper limit voltage of 4.3 to 4.6 V.
Referring to FIG. 8, when cycle-life characteristics of the rechargeable lithium battery cell were compared, while continuously charged and discharged at 3.0 to 4.3 V, 3.0 to 4.4 V, 3.0 to 4.5 V, and 3.0 to 4.6 V, the cycle-life characteristics at 3.0 to 4.4 V, 3.0 to 4.5 V, and 3.0 to 4.6 V were improved, compared with the cycle-life characteristics at 3.0 to 4.3 V. Accordingly, when charged at greater than 4.3 V, specifically, 4.4 to 4.7 V, and more specifically, 4.4 to 4.6 V, CEI was produced and played a role of protecting the positive electrode, resulting in preventing cycle-life deterioration due to degradation of the positive electrode.

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims.

### <Description of Symbols>

100: rechargeable lithium battery
112: negative electrode
113: separator
114: positive electrode
120: battery case
140: sealing member

## Claims

1. A rechargeable lithium battery, comprising
an electrolyte solution including a non-aqueous organic solvent, a lithium salt, and an additive;
a positive electrode including a positive electrode active material; and
a negative electrode including a negative electrode active material,
wherein the additive includes one or more of a compound represented by Chemical Formula 1A and a compound represented by Chemical Formula 1B, and
the positive electrode active material includes a lithium nickel manganese-based oxide represented by Chemical Formula 2, and
a charging upper limit voltage of the rechargeable lithium battery is about 4.4 V to about 4.7 V: 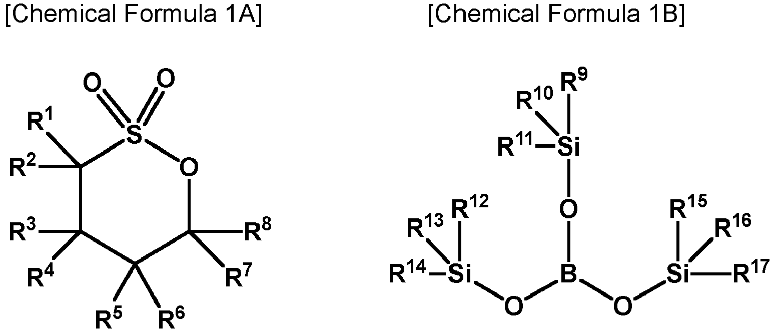 wherein, in Chemical Formula 1A and Chemical Formula 1B,
R¹ to R⁸ are each independently hydrogen, a halogen, a substituted or unsubstituted C1 to C10 alkyl group, or a substituted or unsubstituted C6 to C20 aryl group, and
R⁹ to R¹⁷ are each independently a substituted or unsubstituted C1 to C10 alkyl group or a substituted or unsubstituted C6 to C20 aryl group;
[Chemical Formula 2] LiₐNiₓMn_{1-x-y}A_{y}O_{2±b}X_{c}
wherein, in Chemical Formula 2,
0.9≤a≤1.2, 0≤b≤0.1, 0≤c≤0.1, 0.7≤x≤0.95 and 0≤y < 0.3,
A is one or more element selected from Li, B, Na, Mg, Al, Ti, and Si, and
X is one or more elements selected from S, F, P, and Cl.

2. The rechargeable lithium battery of claim 1, wherein
R¹ to R⁸ in Chemical Formula 1A are each independently hydrogen, or a substituted or unsubstituted C1 to C10 alkyl group.

3. The rechargeable lithium battery of claim 1 or claim 2, wherein
R⁹ to R¹⁷ in Chemical Formula 1B are each independently a substituted or unsubstituted C1 to C10 alkyl group.

4. The rechargeable lithium battery of claim 1, wherein
the compound represented by Chemical Formula 1A and the compound represented by Chemical Formula 1B are selected from compounds listed in Group 1:

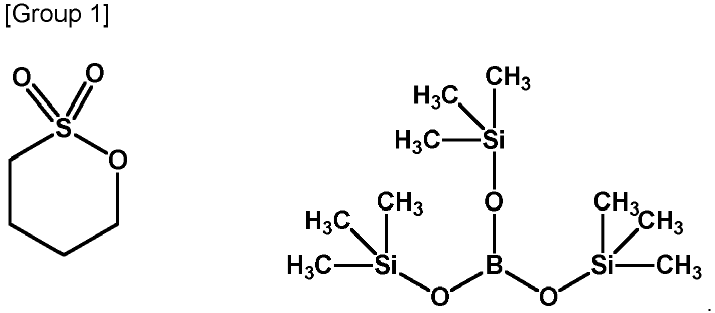

5. The rechargeable lithium battery of any one of claims 1 to 4, wherein
the additive is included in an amount of about 0.01 parts by weight to about 3.0 parts by weight based on 100 parts by weight of the electrolyte solution for a rechargeable lithium battery.

6. The rechargeable lithium battery of any one of claims 1 to 5, wherein
the non-aqueous organic solvent includes cyclic carbonate and chain carbonate in a volume ratio of about 1:9 to about 9:1.

7. The rechargeable lithium battery of any one of claims 1 to 6, wherein
the electrolyte solution further includes one or more of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propene sultone (PST), propane sultone (PS), lithium tetrafluoroborate (LiBF₄), lithium difluorophosphate (LiPO₂F₂), and 2-fluoro biphenyl (2-FBP).

8. The rechargeable lithium battery of any one of claims 1 to 7, wherein
the positive electrode active material includes LiNi_{0.75}Mn_{0.25}O₂, LiNi_{0.80}Mn_{0.20}O₂, LiNi_{0.85}Mn_{0.15}O₂, LiNi_{0.90}Mn_{0.10}O₂, LiNi_{0.95}Mn_{0.05}O₂, or a solid solution thereof.
